# EUROPÄISCHE PATENTSCHRIFT

(11) **EP 3 321 078 B1**
(45) Veröffentlichungstag und Bekanntmachung des Hinweises auf die Patenterteilung: **27.01.2021**
(21) Anmeldenummer: 17187183.3
(22) Anmeldetag: 22.08.2017
(51) Int. Cl.: B29D 30/06, B60C 11/12, B60C 11/03, B29C 33/10

(54) **VULKANISATIONSFORM UND FAHRZEUGLUFTREIFEN**
VULCANISATION MOULD AND PNEUMATIC TYRE FOR A VEHICLE
MOULE DE VULCANISATION ET PNEU DE VÉHICULE

(30) Priorität: 11.11.2016 DE 102016222183
(43) Veröffentlichungstag der Anmeldung: 16.05.2018
(73) Patentinhaber: Continental Reifen Deutschland GmbH, 30165 Hannover (DE)
(72) Erfinder: Schlittenhard, Jan, 30900 Wedemark (DE); Lange, Holger, 30171 Hannover (DE); Seng, Matthias, 30453 Hannover (DE)
(74) Vertreter: Finger, Karsten

(56) Entgegenhaltungen:
- EP-A1- 2 095 931
- WO-A1-2010/030276
- DE-A1-102014 214 841
- DE-A1-102014 216 868
- DE-A1-102014 216 962

## Beschreibung

Die Erfindung betrifft eine Vulkanisationsform für einen Fahrzeugluftreifen, welcher einen Laufstreifen mit Profilpositiven mit parallel zueinander bzw. im Wesentlichen parallel zueinander verlaufenden Einschnitten aufweist, mit den Laufstreifen ausformenden Formteilen, in welchen die Einschnitte ausbildende Lamellenbleche verankert sind und welche mit Rillen ausformenden Profilstegen versehen sind, wobei zwischen benachbarten Lamellenblechen und/oder zwischen Lamellenblechen und Profilstegen in den Formteilen in Draufsicht gerade verlaufende Entlüftungsschlitze ausgebildet sind, welche von der den Laufstreifen ausformenden Innenseite der Formteile ausgehend in die Formteile hineinverlaufen und eine Breite von 0,05 mm bis 0,15 mm aufweisen.

Die Erfindung betrifft ferner einen Fahrzeugluftreifen, welcher einen profilierten Laufstreifen mit Rillen und mit Profilpositiven mit parallel zueinander bzw. im Wesentlichen parallel zueinander verlaufenden Einschnitten aufweist und welcher in einer Vulkanisationsform gemäß der Erfindung vulkanisiert worden ist.

Eine Vulkanisationsform der eingangs genannten Art ist beispielsweise aus der DE 10 2014 216 962 A1 bekannt. Die Vulkanisationsform weist Formteile auf, welche an ihrer Innenseite Mikrostrukturerhebungen besitzen, in welchen zentral Entlüftungsschlitze mit einer Breite von 0,05 mm bis 0,08 mm ausgebildet sind. Dadurch kann auf Ventile, wie Euro-Vents oder Mini-Vents verzichtet werden, sodass bei der Vulkanisation entstehende Austriebe am Laufstreifen vermeidbar sind.

Aus der DE 2014 214 841 A1 ist eine weitere Vulkanisationsform mit Formteilen bekannt, welche Profilpositive ausformende Vertiefungen aufweist, die durch Einschnitte ausformende Lamellenbelche in Vertiefungsabschnitte gegliedert sind. In jedem Vertiefungsabschnitt befindet sich zumindest eine Entlüftungsbohrung, am Boden der Vertiefungsabschnitte sind Mikrostege mit einer Höhe von 0,2 mm bis 1,0 mm ausgebildet. Die Mikrostege sollen beim Entlüften der Vulkanisationsform die Luft aufteilen und derart die Ableitung eingeschlossener Luft in die Entlüftungsbohrungen unterstützen.

Aus der DE 10 2014 216 868 A1 ist eine Vulkanisationsform bekannt, welche Entlüftungsschlitze aufweist, die im Wesentlichen parallel zur Erstreckungsrichtung von Lamellenblechen verlaufen, welche zur Ausbildung von in Draufsicht wellenförmig und sich in der Querrichtung des Laufstreifens erstreckenden Einschnitten wellenförmig gestaltet sind.

Aus der DE 11 2011 102 421 T5 ist eine weitere Vulkanisationsform mit Lamellenblechen bekannt, welche in der Querrichtung des Laufstreifens verlaufende Einschnitte ausbilden. An der Innenseite der Formteile ist jedes Lamellenblech von einem Entlüftungsschlitz umlaufen, welcher innerhalb des Formteiles in einen Entlüftungskanal mündet.

Beim Einformen eines Reifenrohlings in solche Entlüftungsschlitze aufweisenden Vulkanisationsformen hinterlassen die Entlüftungsschlitze auf den Profilpositiven niedrige Erhebungen, welche in Querrichtung, parallel zu den Einschnitten über die gesamte oder nahezu über die gesamte Erstreckungslänge der Einschnitte verlaufen. Derartige am Laufstreifen vorhandene Erhebungen sind vor allem bei Reifen, die unter winterlichen Fahrbedingungen, also auf Eis und/oder Schnee, gefahren werden, nachteilig, da sie die Nettokontaktfläche des Laufstreifens, über welche Reibung übertragen wird, deutlich reduzieren. Dementsprechend leiden die Eis- und Schneegriffeigenschaften, insbesondere bei neuem Fahrzeugluftreifen.

Der Erfindung liegt daher die Aufgabe zugrunde, eine Vulkanisationsform der eingangs genannten Art derart zu gestalten, dass weiterhin eine sichere Formentlüftung über Entlüftungsschlitze gewährleistet ist, wobei die bei neuem Reifen am Laufstreifen vorhandenen, von den Entlüftungsschlitzen stammenden Erhebungen wesentlich geringeren Auswirkungen auf die Griffeigenschaften auf Schnee und/oder Eis haben sollen als jene der bekannten Ausführungen.

Die gestellte Aufgabe wird erfindungsgemäß dadurch gelöst, dass die Entlüftungsschlitze, in Draufsicht auf die Innenseite der Formteile und jeweils zu einer Mittellinie in Erstreckungsrichtung der Lamellenbleche betrachtet, unter einem Winkel von 60° bis 90° verlaufen.

Der erfindungsgemäße Fahrzeugluftreifen ist dadurch gekennzeichnet, dass die Erhebung in Draufsicht und zu einer Mittellinie in Erstreckungsrichtung des Einschnittes betrachtet, unter einem Winkel von 60° bis 90° verläuft.

Gemäß der Erfindung ausgeführte, sehr schmale Entlüftungsschlitze gewährleisten eine gute Formentlüftung, weisen jedoch gegenüber den bekannten Entlüftungsschlitzen eine deutlich geringere Länge auf, da sie quer bzw. im Wesentlichen quer zur Erstreckung der Lamellenbleche verlaufen. Dadurch lässt sich gegenüber den bekannten Ausführungen von Entlüftungsschlitzen die Gesamtfläche von durch Entlüftungsschlitze ausgebildeten Erhebungen am Laufstreifen deutlich verringern. Die Entlüftungsschlitze gemäß der Erfindung hinterlassen am Laufstreifen kurze und niedrige, im Wesentlichen in Umfangsrichtung des Laufstreifens verlaufende Erhebungen, welche die Nettokontaktfläche des Laufstreifens bei neuem Reifen nur unwesentlich reduzieren und in Folge ihrer Orientierung die Fahreigenschaften auf schnee- und/oder eisbedeckten Fahrbahnen kaum beeinträchtigen.

Bei einer bevorzugten Ausführung der Erfindung beträgt der Winkel, unter welchem die Entlüftungsschlitze zur Mittellinie des Lamellenbleches verlaufen, mindestens 80°, vorzugsweise 90°. Auf diese Weise kann ein guter Entlüftungseffekt auch bei speziellen Anordnungen und Ausgestaltungen der Lamellenbleche erzielt werden. Die am Laufstreifen von solchen Entlüftungsschlitze gebildeten Erhebungen verlaufen auf analoge Weise relativ zu den Mittellinien der Einschnitte.

Vorzugsweise beträgt die Breite der Entlüftungsschlitze bis zu 0,10 mm. Die von solchen Entlüftungsschlitzen am Laufstreifen gebildeten Erhebungen sind daher besonders schmal, wobei ein guter Entlüftungseffekt der Entlüftungsschlitze sichergestellt bleibt.

Gemäß einer bevorzugten Ausführungsvariante weisen die Entlüftungsschlitze an den Innenseiten der Formteile zum am nächsten liegenden Lamellenblech bzw. zum benachbarten Profilsteg einen von den Enden der Entlüftungsschlitze als Minimalabstand ermittelten Abstand von 1,0 mm bis 2,0 mm auf. Derartige Abstände vereinfachen die Ausbildung der Entlüftungsschlitze in den Formteilen und ermöglichen eine besonders stabile Verankerung der Lamellenbleche in den Formteilen.

Eine besonders effektive und zuverlässige Entlüftung der Vulkanisationsform ist mit Entlüftungsschlitzen möglich, die bis zum Lamellenblech verlaufen. Diesbezüglich ist es auch von Vorteil, wenn Entlüftungsschlitze senkrecht zur Innenseite des Formteiles in den Formteil hinein verlaufen.

Gemäß einer bevorzugten Ausführungsvariante münden die Entlüftungsschlitze innerhalb des Formteiles in einen zur Außenseite der Formteiles führenden und insbesondere als Bohrung ausgeführten Entlüftungskanal, welcher eine größere Querschnittsfläche als jeder Entlüftungsschlitz aufweist. Diese Maßnahme trägt zur weiteren Verbesserung der Entlüftung der Vulkanisationsform bei.

Bei einer weiteren, für eine gute Entlüftung der Vulkanisationsform vorteilhaften Ausführung der Erfindung sind zwischen benachbarten Lamellenblechen und/oder zwischen Lamellenblechen und Profilstegen jeweils bis zu fünf nebeneinander verlaufende Entlüftungsschlitze vorgesehen.

Beim Einformen des Reifens in der Vulkanisationsform verdrängen die Rillen ausbildenden Profilstege die Kautschukmischung des Laufstreifens. Diesbezüglich ist es von Vorteil, wenn bei Lamellenblechen jeweils ein Entlüftungsschlitz vorgesehen ist, welcher mittig zum Lamellenblech angeordnet ist. Derart angeordnete Entlüftungsschlitze weisen von Profilstegen einen großen Abstand auf, sodass sichergestellt ist, dass die von den Profilstegen verdrängte Kautschukmischung nicht zu diesen Entlüftungsschlitzen gelangt, wodurch die Entlüftung der Vulkanisationsform unterstützt wird.

Zur Unterstützung der Entlüftung der Vulkanisationsform am Beginn des Einformens des Reifens ist es von Vorteil, wenn bei Lamellenblechen zumindest ein Entlüftungsschlitz vorgesehen ist, welcher bei einem eine Rille ausformenden Profilsteg angeordnet ist.

Gemäß einer bevorzugten Ausführungsvariante sind zwischen benachbarten Lamellenblechen und/oder zwischen Lamellenblechen und Profilstegen mehrere, insbesondere zwei, Entlüftungsschlitze bezüglich ihrer Erstreckungsrichtung hintereinander angeordnet. Solche Entlüftungsschlitze sind besonders kurz ausgeführt, sodass die Nettokontaktfläche des Laufstreifens weiter erhöht ist, wobei weiterhin eine zuverlässige Entlüftung der Vulkanisationsform gewährleistet ist.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 einen Querschnitt durch einen Teilbereich eines Formsegmentes einer Vulkanisationsform für einen Fahrzeugluftreifen mit einer Ausführungsvariante der Erfindung,
Fig. 1a eine Draufsicht auf einen Ausschnitt des Teilbereiches aus Fig. 1,
Fig. 1b eine Schrägansicht eines Profilblockes,
Fig. 2a eine Draufsicht analog zu Fig. 1a mit einer zweiten Ausführungsvariante der Erfindung,
Fig. 2b eine Schrägansicht eines Profilblockes,
Fig. 3a eine Draufsicht analog zu Fig. 1 mit einer dritten Ausführungsvariante der Erfindung und
Fig. 3b eine Schrägansicht eines Profilblockes.

Die Erfindung befasst sich mit der Ausgestaltung von den Laufstreifen ausformenden Formteilen einer Vulkanisationsform für Fahrzeugluftreifen, welche Fahrzeugluftreifen für Personenkraftwagen, Vans, Light-Trucks oder Nutzfahrzeuge sind, sowie mit einem in dieser Vulkanisationsform vulkanisierten Fahrzeugluftreifen.

Für Personenkraftwagen vorgesehene Vulkanisationsformen weisen üblicherweise Seitenwandschalen, welche die Seitenwände des Reifens ausformen, und sieben bis dreizehn den Laufstreifenbereich des Reifens formende Formsegmente auf. Zur Vulkanisation wird der fertig aufgebaute Reifenrohling in die Vulkanisationsform eingebracht und in dieser in bekannter Weise eingeformt. Beim Einformen wird die zwischen der Vulkanisationsform und dem Reifenrohling eingeschlossene Luft durch in der Vulkanisationsform vorgesehene Entlüftungseinrichtungen abgeführt und der Reifenrohling anschließend vulkanisiert.

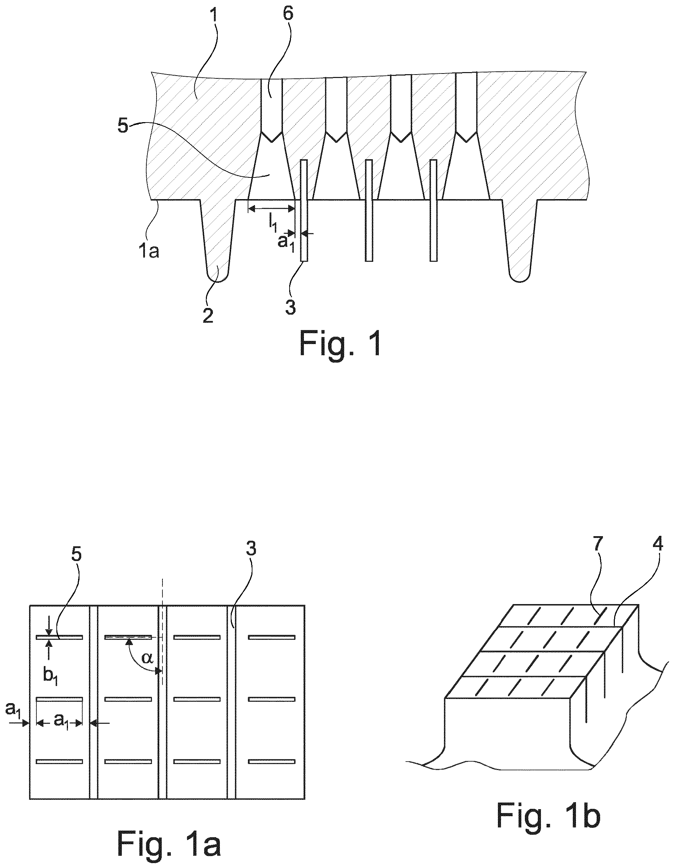

Der Querschnitt in Fig. 1 zeigt einen Teilbereich eines Formsegmentes 1 mit einer den Laufstreifen ausformenden Innenseite 1a und an der Innenseite 1a ausgebildeten Profilstegen 2, welche bei der Vulkanisation im Laufstreifen Querrillen formen. Ferner ragen von der Innenseite 1a zwischen den beiden Profilstegen 2 drei parallel zueinander orientierte ebene Lamellenbleche 3 ab, die im Formsegment 1 verankert sind und bei der Vulkanisation in Querrichtung verlaufende Einschnitte 4 (Fig. 1b) im Laufstreifen formen.

Wie Fig. 1 in Kombination mit Fig. 1a zeigt, sind im Formsegment 1 zwischen einander benachbarten Lamellenblechen 3 und zwischen den randseitigen Lamellenblechen 3 und dem jeweiligen Profilsteg 2 jeweils drei parallel zueinander verlaufende schmale Entlüftungsschlitze 5 ausgebildet. Die den Profilstegen 2 benachbart angeordneten Entlüftungsschlitze 5 werden, abweichend von der Darstellung in Fig. 1a, vorzugsweise in der Nähe der bzw. knapp bei den Profilstegen 2 ausgebildet, der zwischen diesen Entlüftungsschlitzen 5 angeordnete Entlüftungsschlitz 5 bevorzugt mittig. Bei mehr als drei Entlüftungsschlitzen 5 werden die mittleren Entlüftungsschlitze 5 vorzugsweise gleichmäßig zwischen den Lamellenblechen 3 verteilt ausgebildet.

Die Entlüftungsschlitze 5 erstrecken sich ausgehend von der Innenseite 1a des Formsegmentes 1 vorzugsweise im Wesentlichen senkrecht zur Innenseite 1a in das Formsegment 1 hinein (Fig. 1). In Draufsicht auf die Innenseite la erstrecken sich die Entlüftungsschlitze 5 gerade sowie senkrecht bzw. im Wesentlichen senkrecht zur Erstreckungsrichtung der Lamellenbleche 3 (Fig. 1a). Der diesbezüglich in Fig. 1a gezeigte Winkel α kann um bis zu 5° von 90° abweichen.

Wie Fig. 1a zeigt, weisen die Entlüftungsschlitze 5 eine konstante Breite b₁ von 0,05 mm bis 0,15 mm, insbesondere von bis 0,10 mm, und an der Innenseite 1a zum am nächsten liegenden Lamellenblech 3 bzw. zum benachbarten Profilsteg 2 einen vom jeweiligen Ende des Entlüftungsschlitzes 5 im rechten Winkel zum Lamellenblech 3 ermittelten Abstand a₁ von 1,0 mm bis 2,0 mm auf. Bevorzugter Weise stimmen die ausgehend von jedem Ende eines Entlüftungsschlitzes 5 ermittelten Abstände a₁ überein. Die Entlüftungsschlitze 5 können jedoch auch bis zu den Lamellenblechen 3 reichen.

Bei der in Fig. 1 gezeigten Ausführungsvariante münden die Entlüftungsschlitze 5 innerhalb des Formsegmentes 1 jeweils in einen zur Außenseite des Formsegmentes 1 führenden Entlüftungskanal 6 ein, welcher eine größere Querschnittsfläche als die Entlüftungsschlitze 5 aufweist und vorzugsweise als Bohrung ausgeführt ist. Dabei können mehrere Entlüftungsschlitze 5 in einen gemeinsamen Entlüftungskanal 6 einmünden.

Fig. 1b zeigt eine Schrägansicht eines zu einem Laufstreifen gehörenden Profilblockes, welcher drei Einschnitte 4 aufweist, die mit ebenen Lamellenblechen 3 gemäß Fig. 1 bzw. Fig. 1a ausgebildet wurden. Die Einschnitte 4 verlaufen daher in Draufsicht gerade und parallel zueinander und durchqueren den Profilblock bei der gezeigten Variante in Querrichtung. Jeder Einschnitt 4 weist, gemäß der Dicke des ausbildenden Lamellenbleches 3, eine insbesondere konstante Einschnittbreite von 0,3 mm bis 0,8 mm auf. Die im Formsegment 1 vorgesehenen Entlüftungsschlitze 5 (Fig. 1, Fig. 1a) haben bei der Vulkanisation an der Oberfläche des Profilblockes jeweils eine schmale, langgestreckte und gerade verlaufende Erhebung 7 hinterlassen, wobei die Erhebungen 7 - in analoger Weise zu den Entlüftungsschlitzen 5 - senkrecht zur Erstreckungsrichtung der Einschnitte 4 verlaufen.

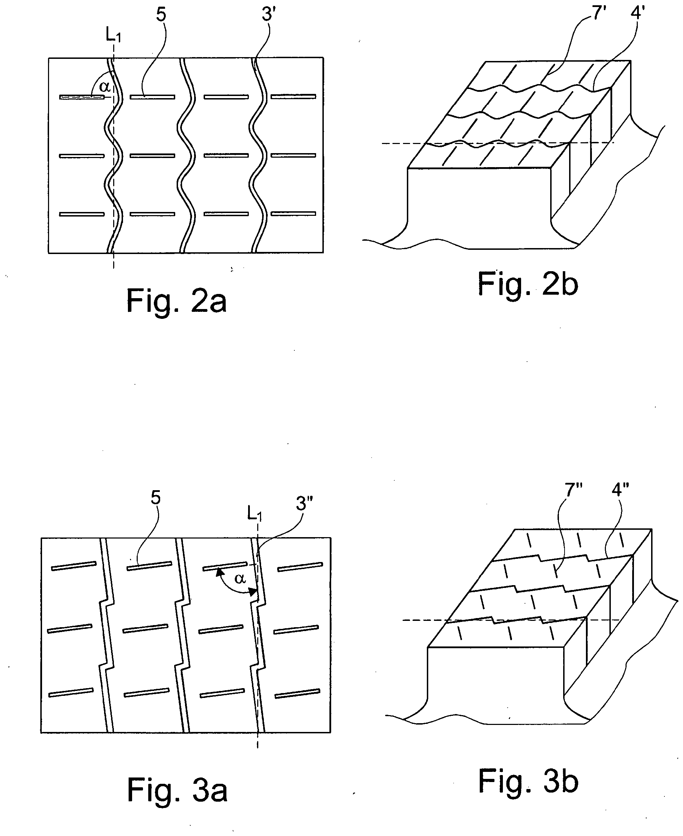

Fig. 2a zeigt eine Draufsicht auf einen Teilbereich eines Formsegmentes 1, welcher bei der Vulkanisation den in Fig. 2b gezeigten Profilblock ausformt. Die in Fig. 2a gezeigte Variante unterscheidet sich von jener gemäß Fig. 1a dadurch, dass die Lamellenbleche 3' wellenförmig gestaltet sind und in Draufsicht wellenförmige Einschnitte 4' im Profilblock ausbilden (Fig. 2b). Die Entlüftungsschlitze 5 verlaufen in Draufsicht auf die Innenseite des Formsegmentes 1 senkrecht bzw. unter dem oben erwähnten Winkel α zu einer in der Erstreckungsrichtung der Lamellenbleche 3' verlaufenden Mittellinie L₁. Bei der gezeigten Ausführung verlaufen die zwischen Lamellenblechen 3' vorgesehenen Entlüftungsschlitze 5 ferner jeweils zwischen einem Lamellenblechtal und einem Lamellenblechberg. Der in Fig. 2b gezeigte Profilblock weist von den Entlüftungsschlitzen 5 stammende und zwischen den wellenförmigen Einschnitten 4' verlaufende schmale, langgestreckte und gerade verlaufende Erhebungen 7' auf.

Bei der in Fig. 2a gezeigten Variante können die zwischen benachbarten Lamellenblechen 3' ausgebildeten Entlüftungskanäle 5 zwischen Lamellenblechbergen und daher unter einem von 90° abweichenden Winkel α verlaufen.

Fig. 3a zeigt eine Draufsicht auf einen Teilbereich eines Formsegmentes, welcher bei der Vulkanisation den in Fig. 3b gezeigten Profilblock ausformt. Die in Fig. 3a gezeigte Variante unterscheidet sich von jener gemäß Fig. 1a dadurch, dass sich die Lamellenbleche 3" aus sägezahnförmig verlaufenden Abschnitten zusammensetzen und in Draufsicht sägezahnförmige Einschnitte 4" im Profilblock formen (Fig. 3b). Die Entlüftungsschlitze 5 verlaufen in Draufsicht auf die Innenseite des Formsegmentes 1 senkrecht zu den längeren Abschnitten des sägezahnförmig gestalteten Lamellenbleches 3". Alternativ können die Entlüftungsschlitze 5 in Draufsicht auf die Innenseite 1a des Formsegmentes 1 senkrecht zu einer in Erstreckungsrichtung der Lamellenbleche 3" ausgerichteten Mittellinie L₁ unter dem bereits erwähnten Winkel α verlaufen. Der in Fig. 3b gezeigten Profilblock weist von den Entlüftungsschlitzen 5 stammende zwischen den sägezahnförmigen Einschnitten 4" verlaufende schmale, langgestreckte und gerade verlaufende Erhebungen 7" auf.

Sämtliche von Entlüftungsschlitzen 5 stammende Erhebungen 7, 7', 7" weisen im Wesentlichen die Breite b₁ sowie die Erstreckungslänge l₁ der Entlüftungsschlitze 5 und eine im Querschnitt gerundete Gestalt auf. Die Erhebungen 7, 7', 7" weisen gegenüber der Oberfläche der Profilblöcke eine Höhe von 0,1 mm bis 0,2 mm auf.

Der in den Figuren 1a, 2a, 3a eingezeichnete Winkel α zwischen den Entlüftungsschlitzen 4 und den Lamellenblechen 3, 3', 3" oder den Mittellinien derselben beträgt mindestens 60°, insbesondere mindestens 80°.

Zwischen einander benachbarten Lamellenblechen bzw. zwischen Lamellenblechen und Profilstegen ist jeweils zumindest ein Entlüftungsschlitz vorgesehen, die maximale Anzahl beträgt insbesondere fünf. Ist in den genannten Bereichen jeweils ein einziger Entlüftungsschlitz vorgesehen, ist dieser bezogen auf das Lamellenblech bzw. die Lamellenbleche mittig angeordnet. Sind zwei Entlüftungsschlitze vorgesehen, sind diese jeweils in der Nähe eines eine Rillen ausformenden Profilsteges und damit in den Randbereichen des ein Profilpositiv ausformenden Bereiches eines Formteiles angeordnet. Bei drei oder mehr als drei Entlüftungsschlitzen sind jeweils zwei in den genannten Randbereichen und die weiteren gleichmäßig zwischen diesen Entlüftungsschlitzen angeordnet.

Die Erfindung ist auf die beschriebenen Ausführungsvarianten nicht beschränkt. Die Lamellenbleche können auch Einschnitte formen, welche sich in Draufsicht und bezogen auf ihre Mittellinien unter einem von der exakten Querrichtung um bis zu 45° abweichenden Winkel erstrecken. Ferner können die Lamellenbleche in einem Abstand vor den Profilstegen enden, sodass die Lamellenbleche innerhalb der Profilpositive endende oder nur mit einem ihrer Enden in eine Rille einmündende Einschnitte ausbilden. Die Formsegmente bzw. die den Laufstreifen ausformenden Formteile können Profilblöcke einer beliebigen Gestalt oder im Laufstreifen in Umfangsrichtung umlaufende Profilbänder ausbilden. Anstelle von jeweils einem Entlüftungsschlitze 5 können mehrere, insbesondere zwei, kürzere Entlüftungsschlitze mit übereinstimmender oder im Wesentlichen überstimmender Erstreckungsrichtung hintereinander angeordnet sein.

### Bezugsziffernliste

- 1: Formsegment
- 1a: Innenseite
- 2: Profilsteg
- 3, 3', 3": Lamellenblech
- 4, 4', 4": Einschnitt
- 5: Entlüftungsschlitz
- 6: Entlüftungskanal
- 7, 7', 7": Erhebung
- a₁: Abstand
- b₁: Breite
- l₁: Erstreckungslänge
- L₁: Mittellinie
- α: Winkel

## Patentansprüche

1. Vulkanisationsform für einen Fahrzeugluftreifen, welcher einen Laufstreifen mit Profilpositiven mit parallel zueinander bzw. im Wesentlichen parallel zueinander verlaufenden Einschnitten (4, 4', 4") aufweist, mit den Laufstreifen ausformenden Formteilen (1), in welchen die Einschnitte (4, 4', 4") ausbildende Lamellenbleche (3, 3', 3") verankert sind und welche mit Rillen ausformenden Profilstegen (2) versehen sind, wobei zwischen benachbarten Lamellenblechen (3, 3', 3") und/oder zwischen Lamellenblechen (3, 3', 3") und Profilstegen (2) in den Formteilen (1) in Draufsicht gerade verlaufende Entlüftungsschlitze (5) ausgebildet sind, welche von der den Laufstreifen ausformenden Innenseite (1a) der Formteile (1) ausgehend in die Formteile (1) hineinverlaufen und eine Breite (b₁) von 0,05 mm bis 0,15 mm aufweisen,
dadurch geknnzeichnet,
dass die Entlüftungsschlitze (5), in Draufsicht auf die Innenseite (1a) der Formteile (1) und jeweils zu einer Mittellinie (L₁) in Erstreckungsrichtung der Lamellenbleche (3, 3', 3") betrachtet, unter einem Winkel (α) von 60° bis 90° verlaufen.

2. Vulkanisationsform nach Anspruch 1, **dadurch gekennzeichnet, dass** der Winkel (a), unter welchem die Entlüftungsschlitze (5) zur Mittellinie (L₁) der Lamellenbleche (3, 3', 3") verlaufen, mindestens 80° beträgt.

3. Vulkanisationsform nach Anspruch 1 oder 2, **dadurch gekennzeichnet, dass** der Winkel (α), unter welchem die Entlüftungsschlitze (5) zur Mittellinie (L₁) der Lamellenbleche (3, 3', 3") verlaufen, 90° beträgt.

4. Vulkanisationsform nach Anspruch 1, **dadurch gekennzeichnet, dass** die Breite (b₁) der Entlüftungsschlitze (5) bis zu 0,10 mm beträgt.

5. Vulkanisationsform nach einem der Ansprüche 1 bis 4, **dadurch gekennzeichnet, dass** die Entlüftungsschlitze (5) an den Innenseiten (1a) der Formteile (1) zum am nächsten liegenden Lamellenblech (3, 3', 3") bzw. zum benachbarten Profilsteg (2) einen von den Enden der Entlüftungsschlitze (5) als Minimalabstand ermittelten Abstand (a₁) von 1,0 mm bis 2,0 mm aufweisen.

6. Vulkanisationsform nach einem der Ansprüche 1 bis 4, **dadurch gekennzeichnet, dass** die Entlüftungsschlitze (5) bis zum Lamellenblech (3, 3', 3") verlaufen.

7. Vulkanisationsform nach einem der Ansprüche 1 bis 6, **dadurch gekennzeichnet, dass** die Entlüftungsschlitze (5) innerhalb des Formteiles (1) in einen zur Außenseite der Formteiles (1) führenden und insbesondere als Bohrung ausgeführten Entlüftungskanal (6) münden, welcher eine größere Querschnittsfläche als jeder Entlüftungsschlitz (5) aufweist.

8. Vulkanisationsform nach einem der Ansprüche 1 bis 7, **dadurch gekennzeichnet, dass** zwischen benachbarten Lamellenblechen (3, 3', 3") und/oder zwischen Lamellenblechen (3, 3', 3") und Profilstegen (2) jeweils bis zu fünf nebeneinander angeordnete Entlüftungsschlitze (5) vorgesehen sind.

9. Vulkanisationsform nach einem der Ansprüche 1 bis 8, **dadurch gekennzeichnet, dass** bei Lamellenblechen (3, 3', 3") jeweils ein Entlüftungsschlitz (5) vorgesehen ist, welcher mittig zum Lamellenblech (3, 3', 3") angeordnet ist.

10. Vulkanisationsform nach einem der Ansprüche 1 bis 9, **dadurch gekennzeichnet, dass** bei Lamellenblechen (3, 3', 3") zumindest ein Entlüftungsschlitz (5) vorgesehen ist, welcher bei einem eine Rille ausformenden Profilsteg (2) angeordnet ist.

11. Vulkanisationsform nach einem der Ansprüche 1 bis 10, **dadurch gekennzeichnet, dass** zwischen benachbarten Lamellenblechen (3, 3', 3") und/oder zwischen Lamellenblechen (3, 3', 3") und Profilstegen (2) mehrere, insbesondere zwei, Entlüftungsschlitze (5) hintereinander angeordnet sind.

12. Fahrzeugluftreifen, welcher einen profilierten Laufstreifen mit Rillen und mit Profilpositiven mit parallel zueinander bzw. im Wesentlichen parallel zueinander verlaufenden Einschnitten (4, 4', 4") aufweist, wobei zwischen einander benachbarten Einschnitten (4, 4', 4") und/oder zwischen Einschnitten (4, 4', 4") und Rillen an der Oberfläche der Profilpositive jeweils zumindest eine gerade verlaufende, langgestreckte Erhebung (7, 7', 7") mit einer Breite von 0,05 mm bis 0,15 mm ausgebildet ist, und welcher in einer Vulkanisationsform gemäß einem der Ansprüche 1 bis 11 vulkanisiert worden ist,
**dadurch gekennzeichnet,**
**dass** die Erhebung (7, 7', 7") in Draufsicht und zu einer Mittellinie (L₁) in Erstreckungsrichtung des Einschnittes (4, 4' 4") betrachtet, unter einem Winkel von 60° bis 90° verläuft.

13. Fahrzeugluftreifen nach Anspruch 12, **dadurch gekennzeichnet, dass** der Winkel, unter welchem die Erhebungen (7, 7', 7") zur Mittellinie (L₁) des Einschnittes (4, 4' 4") verlaufen, mindestens 80° beträgt.

14. Fahrzeugluftreifen nach Anspruch 12 oder 13, **dadurch gekennzeichnet, dass** der Winkel, unter welchem die Erhebungen (7, 7', 7") zur Mittellinie (L₁) des Einschnittes (4, 4' 4") verlaufen, 90° beträgt.

## Claims

1. Vulcanizing mould for a pneumatic vehicle tyre which has a tread having positive profiles with sipes (4, 4', 4") which extend parallel to one another or substantially parallel to one another, comprising mould parts (1) which form the tread, in which mould parts there are anchored sipe blades (3, 3', 3") which form the sipes (4, 4', 4"), and which mould parts are provided with profile webs (2) which form grooves, wherein venting slits (5) which extend rectilinearly in plan view are formed between adjacent sipe blades (3, 3', 3") and/or between sipe blades (3, 3', 3") and profile webs (2) in the mould parts (1), which venting slits, starting from the tread-forming inner side (1a) of the mould parts (1), run into the mould parts (1) and have a width (b₁) of 0.05 mm to 0.15 mm,
**characterized**
**in that**, as viewed in plan view of the inner side (1a) of the mould parts (1) and in each case with respect to a centre line (L₁) in the direction of extent of the sipe blades (3, 3', 3"), the venting slits (5) extend at an angle (α) of 60° to 90°.

2. Vulcanizing mould according to Claim 1, **characterized in that** the angle (α) at which the venting slits (5) extend with respect to the centre line (L₁) of the sipe blades (3, 3', 3") is at least 80°.

3. Vulcanizing mould according to Claim 1 or 2, **characterized in that** the angle (α) at which the venting slits (5) extend with respect to the centre line (L₁) of the sipe blades (3, 3', 3") is 90°.

4. Vulcanizing mould according to Claim 1, **characterized in that** the width (b₁) of the venting slits (5) is up to 0.10 mm.

5. Vulcanizing mould according to one of Claims 1 to 4, **characterized in that** the venting slits (5) on the inner sides (1a) of the mould parts (1) have a distance (a₁), determined as minimum distance from the ends of the venting slits (5), of 1.0 mm to 2.0 mm from the nearest sipe blade (3, 3', 3") or from the adjacent profile web (2).

6. Vulcanizing mould according to one of Claims 1 to 4, **characterized in that** the venting slits (5) extend up to the sipe blade (3, 3', 3").

7. Vulcanizing mould according to one of Claims 1 to 6, **characterized in that** the venting slits (5) open within the mould part (1) into a venting duct (6), configured in particular as a bore, which leads to the outer side of the mould part (1) and has a larger cross-sectional area than each venting slit (5).

8. Vulcanizing mould according to one of Claims 1 to 7, **characterized in that** in each case up to five venting slits (5) arranged next to one another are provided between adjacent sipe blades (3, 3', 3") and/or between sipe blades (3, 3', 3") and profile webs (2).

9. Vulcanizing mould according to one of Claims 1 to 8, **characterized in that** in each case a venting slit (5) is provided at sipe blades (3, 3', 3") and is arranged centrally to the sipe blade (3, 3', 3").

10. Vulcanizing mould according to one of Claims 1 to 9, **characterized in that** at least one venting slit (5) is provided at sipe blades (3, 3', 3") and is arranged at a groove-forming profile web (2).

11. Vulcanizing mould according to one of Claims 1 to 10, **characterized in that** a plurality of, in particular two, venting slits (5) are arranged behind one another between adjacent sipe blades (3, 3', 3") and/or between sipe blades (3, 3', 3") and profile webs (2).

12. Pneumatic vehicle tyre which has a profile tread having grooves and having positive profiles with sipes (4, 4', 4") which extend parallel to one another or substantially parallel to one another, wherein in each case at least one rectilinearly extending, elongate elevation (7, 7', 7") having a width of 0.05 mm to 0.15 mm is formed between mutually adjacent sipes (4, 4', 4") and/or between sipes (4, 4', 4") and grooves on the surface of the positive profiles, and which tyre has been vulcanized in a vulcanizing mould according to one of Claims 1 to 11,
**characterized**
**in that**, as viewed in plan view and with respect to a centre line (L₁) in the direction of extent of the sipe (4, 4', 4"), the elevation (7, 7', 7") extends at an angle of 60° to 90°.

13. Pneumatic vehicle tyre according to Claim 12, **characterized in that** the angle at which the elevations (7, 7', 7") extend with respect to the centre line (L₁) of the sipe (4, 4', 4") is at least 80°.

14. Pneumatic vehicle tyre according to Claim 12 or Claim 13, **characterized in that** the angle at which the elevations (7, 7', 7") extend with respect to the centre line (L₁) of the sipe (4, 4', 4") is 90°.

## Revendications

1. Moule de vulcanisation pour un pneu de véhicule, qui comprend une bande de roulement munie d'éléments positifs profilés munis d'entailles parallèles les unes aux autres ou essentiellement parallèles les unes aux autres (4, 4', 4"), muni de parties de moule (1) formant la bande de roulement, dans lesquelles des tôles lamellaires (3, 3', 3") formant les entailles (4, 4', 4") sont ancrées et qui sont munies de traverses profilées (2) formant des rainures, des fentes d'aération (5) droites en vue de dessus étant formées entre des tôles lamellaires voisines (3, 3', 3") et/ou entre des tôles lamellaires (3, 3', 3") et des traverses profilées (2) dans les parties de moule (1), qui s'étendent dans les parties de moule (1) à partir du côté intérieur (la), formant la bande de roulement, des parties de moule (1) et présentent une largeur (b₁) de 0,05 mm à 0,15 mm,
**caractérisé en ce que**
les fentes d'aération (5) s'étendent, en vue de dessus sur le côté intérieur (1a) des parties de moule (1) et à chaque fois par rapport à une ligne centrale (L₁) dans la direction de développement des tôles lamellaires (3, 3', 3"), à un angle (α) de 60° à 90°.

2. Moule de vulcanisation selon la revendication 1, **caractérisé en ce que** l'angle (a) auquel les fentes d'aération (5) s'étendent par rapport à la ligne centrale (L₁) des tôles lamellaires (3, 3', 3") est d'au moins 80°.

3. Moule de vulcanisation selon la revendication 1 ou 2, **caractérisé en ce que** l'angle (a) auquel les fentes d'aération (5) s'étendent par rapport à la ligne centrale (L₁) des tôles lamellaires (3, 3', 3") est de 90°.

4. Moule de vulcanisation selon la revendication 1, **caractérisé en ce que** la largeur (b₁) des fentes d'aération (5) est de jusqu'à 0,10 mm.

5. Moule de vulcanisation selon l'une quelconque des revendications 1 à 4, **caractérisé en ce que** les fentes d'aération (5) présentent sur les côtés intérieurs (1a) des parties de moule (1) par rapport à la tôle lamellaire la plus proche (3, 3', 3") ou par rapport à la traverse profilée voisine (2), un écart (a₁) déterminé à partir des extrémités des fentes d'aération (5) en tant qu'écart minimal de 1,0 mm à 2,0 mm.

6. Moule de vulcanisation selon l'une quelconque des revendications 1 à 4, **caractérisé en ce que** les fentes d'aération (5) s'étendent jusqu'à la tôle lamellaire (3, 3' , 3").

7. Moule de vulcanisation selon l'une quelconque des revendications 1 à 6, **caractérisé en ce que** les fentes d'aération (5) débouchent à l'intérieur de la partie de moule (1) dans un canal d'aération (6) conduisant jusqu'au côté extérieur des parties de moule (1) et notamment réalisé sous la forme d'un alésage, qui présente une surface de section transversale plus grande que chaque fente d'aération (5).

8. Moule de vulcanisation selon l'une quelconque des revendications 1 à 7, **caractérisé en ce qu'**à chaque fois jusqu'à cinq fentes d'aération (5) agencées les unes à côté des autres sont prévues entre des tôles lamellaires voisines (3, 3', 3") et/ou entre des tôles lamellaires (3, 3', 3") et des traverses profilées (2) .

9. Moule de vulcanisation selon l'une quelconque des revendications 1 à 8, **caractérisé en ce qu'**une fente d'aération (5) est prévue à chaque fois au niveau des tôles lamellaires (3, 3', 3"), qui est agencée de manière centrée par rapport à la tôle lamellaire (3, 3', 3").

10. Moule de vulcanisation selon l'une quelconque des revendications 1 à 9, **caractérisé en ce qu'**au moins une fente d'aération (5) est prévue au niveau des tôles lamellaires (3, 3', 3"), qui est agencée au niveau d'une traverse profilée (2) formant une rainure.

11. Moule de vulcanisation selon l'une quelconque des revendications 1 à 10, **caractérisé en ce que** plusieurs, notamment deux, fentes d'aération (5), sont agencées les unes après les autres entre des tôles lamellaires voisines (3, 3', 3") et/ou entre des tôles lamellaires (3, 3', 3") et des traverses profilées (2).

12. Pneu de véhicule, qui comprend une bande de roulement profilée munie de rainures et munie d'éléments positifs profilés munis d'entailles parallèles les unes aux autres ou essentiellement parallèles les unes aux autres (4, 4', 4"), à chaque fois au moins une surélévation droite étirée en longueur (7, 7', 7") d'une largeur de 0,05 mm à 0,15 mm étant formée entre des entailles voisines les unes des autres (4, 4', 4") et/ou entre des entailles (4, 4', 4") et des rainures sur la surface des éléments positifs profilés, et qui a été vulcanisé dans un moule de vulcanisation selon l'une quelconque des revendications 1 à 11,
**caractérisé en ce que**
la surélévation (7, 7', 7") s'étend, en vue de dessus et par rapport à une ligne centrale (L₁) dans la direction de développement de l'entaille (4, 4', 4"), à un angle de 60° à 90°.

13. Pneu de véhicule selon la revendication 12, **caractérisé en ce que** l'angle auquel les surélévations (7, 7', 7") s'étendent par rapport à la ligne centrale (L₁) de l'entaille (4, 4', 4") est d'au moins 80°.

14. Pneu de véhicule selon la revendication 12 ou 13, **caractérisé en ce que** l'angle auquel les surélévations (7, 7', 7") s'étendent par rapport à la ligne centrale (L₁) de l'entaille (4, 4', 4") est de 90°.
